# EUROPEAN PATENT SPECIFICATION

(11) **EP 0 544 881 B1**
(45) Date of publication and mention of the grant of the patent: **29.01.1997**
(21) Application number: 92913328.8
(22) Date of filing: 26.05.1992
(51) Int. Cl.: F16H 35/06, F16H 55/18, F16H 57/02, F16H 57/12

(54) **BACKLASH ADJUSTMENT MECHANISM**
SPIELEINSTELLVORRICHTUNG
MECHANISME DE REGLAGE DU JEU

(30) Priority: 24.06.1991 WO PCT/US91/04479
(43) Date of publication of application: 09.06.1993
(73) Proprietor: CATERPILLAR INC., Peoria Illinois 61629-6490 (US)
(72) Inventor: BAKER, Steven, R., Magnolia, IL 61336 (US); SMITH, Michael, J., Dunlap, IL 61525 (US); BALLHEIMER, Benny, Peoria, IL 61615 (US)
(74) Representative: Jackson, Peter Arthur
(86) International application number: US9204364
(87) International publication number: WO9300530

(56) References cited:
- FR-A- 524 837
- US-A- 2 444 734
- US-A- 2 860 015
- US-A- 3 405 580
- US-A- 3 502 059
- US-A- 4 241 619
- US-A- 4 532 822
- US-A- 4 550 626
- US-A- 4 747 321

## Description

This invention relates to gearing systems and more particularly to a backlash adjustment mechanism for gearing systems.

Many factors may affect the proper meshing between gears in an overhead camshaft engine drive train. For example, normal engine operation may cause compression of the cylinder head gasket and maintenance disturbances may necessitate the replacement or milling of the cylinder head. It is known in the art that backlash adjustment mechanisms for gearing systems are useful so that backlash settings between gears may be changed to accommodate for normal operation, wear, and maintenance disturbances that affect the proper meshing of the drive train gears.

Backlash adjustment methods are known which mount an idler gear on an adjustable bracket to provide adjustment control between its mating gears. This method accomplishes adjustment, but makes it necessary to position the center distances between the idler and both its mating gears before securing the idler into place.

Another backlash adjustment method improves upon the positioning problem, set forth above, through the backlash adjustment being made only between the idler gear and one of its mating gears while eliminating the need for adjustment between the idler gear and the other of its mating gears. This is accomplished through the use of connector of fixed length. With the idler gear mounted on an adjustment bracket, the connector is attached to the idler gear and one mating gear establishing a fixed center distance betwen the two gears. Backlash adjustment can then be made btween the idler gear and the other mating gear without affecting this fixed center distance provided by the connector. This backlash adjustment method requires the use of both the connector and the adjustment bracket. The backlash adjustment method further requires complicated machining of standard parts in order to mount and thereby utilize the invention.

US-A-3502059 discloses a gear train with backlash adjustment, the gear train including a first gear having a first centerline, a second gear having a second centerline, an idler gear having a third centerline drivingly connecting the first and the second gear, and an idler gear mounting rotatably supporting the idler gear and being releasably connected to a fixed member and establishing a movable axis coincidental with the centerline of the idler gear, and, according to the present invention, such a gear train is characterised in that said idler gear meshes directly with the first and the second gear, a pivot is fixedly connected to said fixed member with the idler gear mounting being pivotal thereabout, and said pivot is disposed between the centerlines of the idler gear and the first gear and substantially on a line intersecting the centerlines of the idler gear and the first gear so that a center distance between the idler gear and the second gear can be adjusted while maintaining a substantially fixed distance between the idler gear and the first gear.

An eccentric adjustment of the kind, which might be useful for adjustment of the idler gear mounting, is disclosed in FR-A-524837.

The new gear train is particularly applicable to an internal combustion engine having a cylinder block rotatably mounting a crankshaft; a cylinder head removably connected to the cylinder block; a camshaft rotatably mounted within the internal combustion engine; with the gear train driving the camshaft from the crankshaft, the idler gear mounting being releasably connected to the cylinder block, and the pivot being fixedly connected to the cylinder block.

The backlash adjustment of the prior art can only be accomplished with the use of both a connector and an adjustment bracket. The connector is used to maintain a fixed center distance between an idler gear and one of its mating gears, while the adjustment bracket mounts the idler gear allowing it to pivot in a plurality of adjustment positions. The prior art also requires complicated machining of the cylinder block in order to mount and secure the parts necessary to accomplish the backlash adjustment function.

The present invention will allow the adjustment of backlash with fewer parts and minimal machining to the cylinder block. The present invention also utilizes the benefit of a geometric alignment relationship between two gears to accomplish the same function as the prior art connector in maintaining a fixed center distance between the idler gear and one of its mating gears.

In the accompanying drawings:
Fig. 1 is a partial end view of an internal combustion engine having a camshaft gear train with a backlash adjustment mechanism according to the present invention;
Fig. 2 is an enlarged view of a portion of Fig. 1 showing the backlash adjustment mechanism;
Fig. 3 is a sectional view taken along line 3-3 of Fig. 2;
Fig. 4 is a diagrammatic view showing a geometrical alignment relationship between the backlash adjustment mechanism and two mating gears with positions and sizes altered for illustrative convenience;
Fig. 5 is a partial end view of an internal combustion engine having a camshaft gear train with a backlash adjustment mechanism according to a second embodiment of the present invention;
Fig. 6 is an enlarged view of a portion of Fig. 5 showing the second embodiment of the present invention;
Fig. 7 is a sectional view taken along line 7-7 of Fig. 6; and
Fig. 8 is a diagrammatic view showing a geometrical alignment relationship between the second embodiment of the backlash adjustment mechanism and two mating gears with positions and sizes altered for illustrative convenience.

An internal combustion engine of the in-line type is illustrated at 10 having a cylinder block 11 rotatably mounting a crankshaft 12. A removably connected cylinder head 13 is mounted at the upper end of the cylinder block 11 in a conventional manner.

An overhead camshaft 14 is rotatably mounted within the cylinder head 13, and is used to operate the engine valves (not shown). A camshaft gear train 17 is enclosed in a gear train cover 16 and drives the camshaft 14 from the crankshaft 12.

The camshaft gear train 17 includes a drive gear 18 secured to the crankshaft 12 for rotation therewith. The drive gear 18 drivingly meshes with cluster idler gears 19 and 21, respectively, which are conventionally, rotatably mounted to the cylinder block 11. An idler gear 22 is in meshing engagement with the cluster idler gear 21 and is also conventionally, rotatably mounted to the cylinder block 11. An adjustable idler gear 23 is in direct meshing engagement with the idler gear 22, and, in turn, directly engages a camshaft gear 24 mounted on the camshaft 14 for rotation therewith to drivingly interconnect the idler gear 22 and the camshaft gear 24. Although the camshaft gear train 17 is shown with several gears, it is recognized that the camshaft gear train may have a minimum of three gears, the idler gear 22 acting as a drive gear, the adjustable idler gear 23, and the camshaft gear 24.

A backlash adjustment mechanism 26 provides a means 30 for adjusting the backlash between the adjustable idler gear 23 and the camshaft gear 24, and includes a body 27 having a pivot 28, such as a shaft, extending outwardly therefrom and a plurality of threaded holes 29 with the body 27 being mounted on the cylinder block 11. An idler gear mounting 31, such as a rotor, has an off-center mounting bore 32 and a plurality of slotted holes 33, and is eccentrically and pivotally mounted on the pivot 28 establishing a movable axis 34 through the centerline of the rotor 31. The adjustable idler gear 23 is rotatably mounted on the rotor 31. A thrust plate 37 having a plurality of holes 38 secures the rotor 31 to the shaft 28 while retaining the adjustable idler gear 23 on the rotor 31. The thrust plate 37 is secured to the body 27 by a securing means 39 which includes a plurality of studs 41, 42, a bolt 43, and a plurality of nuts 44 and 45. The studs 41 and 42 pass through the slotted holes 33 located in the rotor 31 and are threaded into the threaded holes 29 of the body 27. The bolt 43 passes through a hole in the shaft 28 of the body 27 and is threaded into a threaded hole of the cylinder block 11.

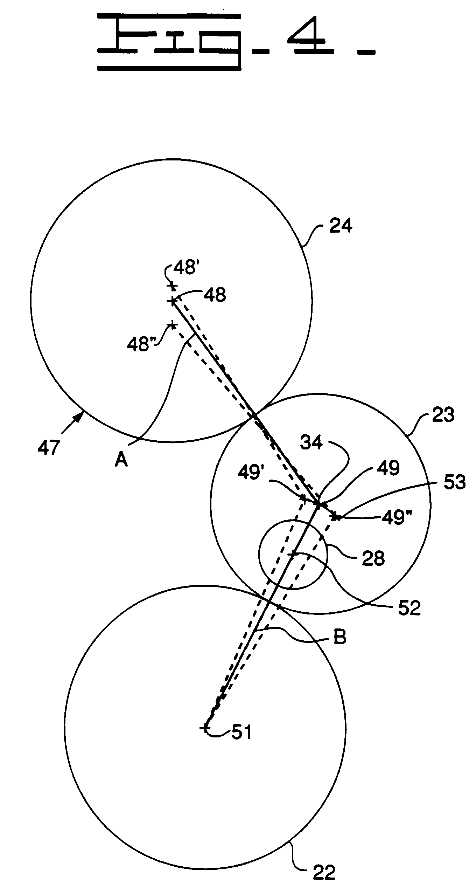

A geometric alignment 47 relationship of the camshaft gear 24, the adjustable idler gear 23, and the idler gear 22 is shown in Fig. 4 along with a plurality of centerlines 48, 49, and 51 of the gears 24, 23, and 22, respectively. The centerlines 48, 49, and 51 also correspond to the nominal adjustment position of the camshaft gear 24, the adjustable idler gear 23, and the idler gear 22 at initial assembly. The nominal adjustment position 49 of the adjustable idler gear 23 also represents the nominal adjustment position of the rotor 31 at initial assembly and is coincident with the movable axis 34. A known nominal center distance represented by a line A is the distance between the centerline 48 of the camshaft gear 24 and the centerline 49 of the adjustable idler gear 23. A fixed nominal center distance represented by a line B is the distance between the centerline 49 of the adjustable idler gear 23 and the centerline 51 of the idler gear 22. A pivot point 52 is the center of the shaft 28 of the body 27 and is positioned essentially on center distance line B. The camshaft gear 24 may be moved out of its nominal adjustment position 48 due to wear or maintenance disturbances making center distance adjustment necessary between the camshaft gear 24 and the adjustable idler gear 23. A means 54 is provided for pivoting the rotor 31 on the shaft 28 around the pivot point 52 to adjust the center distance between the camshaft gear 24 and the adjustable idler gear 23. The pivoting means 54 includes the establishment of a plurality of adjustment positions between 49' and 49", where 49' and 49" illustrate the extreme adjustment positions allowable by the slotted holes 33 of the rotor 31. An arcuate path 53 is created about the pivot point 52 as the movable axis 34 rotates between the adjustment positions 49'-49". The reference numerals 48' and 48" illustrate the extreme movement positions available for the camshaft gear 24 in relation to the allowable adjustment positions 49' and 49", although it should be noted that the camshaft gear 24 may move to an infinite number of positions between 48' and 48" due to wear or maintenance disturbances.

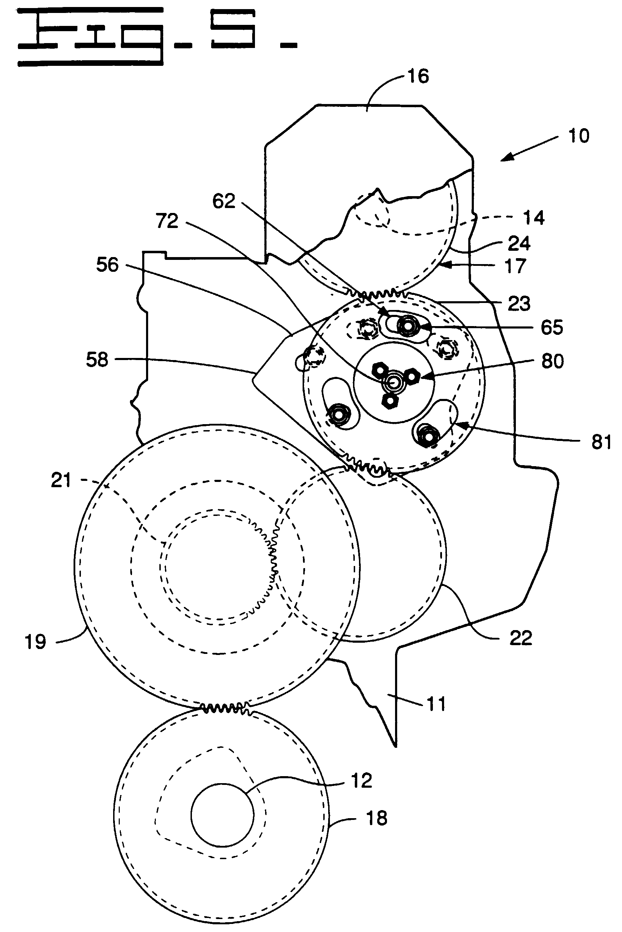

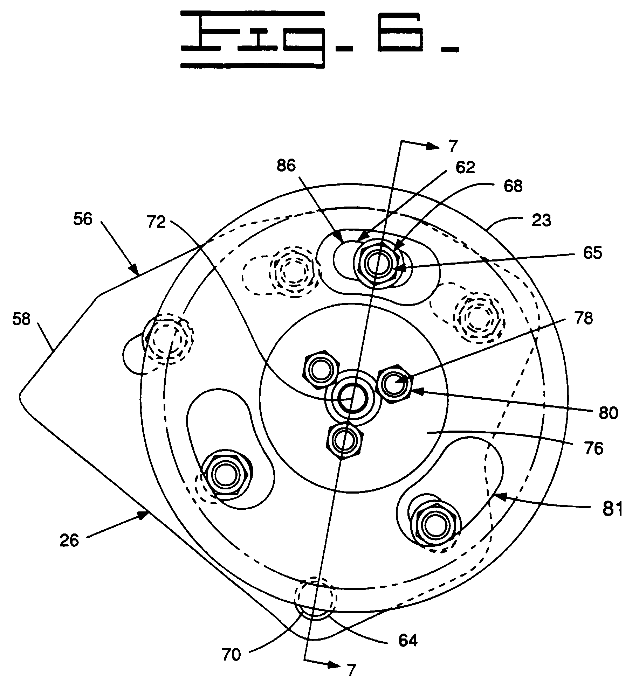

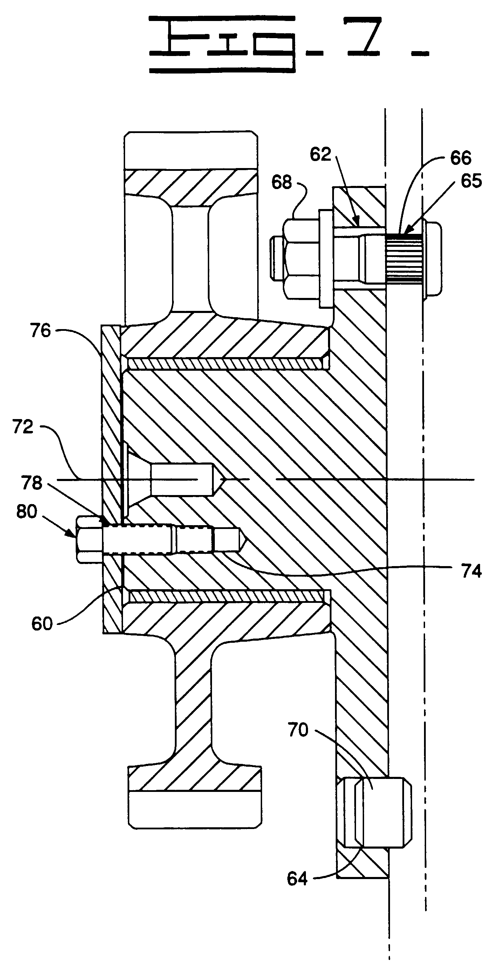

A second embodiment of the present invention is disclosed in Figs. 5-8. It should be noted that the same reference numerals of the first embodiment are used to designate similarly constructed counterpart elements of this embodiment. Referring primarily to Figs. 6 and 7, the backlash adjustment mechanism 26 provides a means 56 for adjusting the backlash between the adjustable idler gear 23 and the camshaft gear 24. The backlash adjustment mechanism 26 includes an idler gear mounting 58, such as a body, having a shaft 60 extending outwardly therefrom, a plurality of slotted holes 62, and a dowel hole 64. The body 58 is releasably mounted on the cylinder block 11 by a fastening means 65, which includes a plurality of studs 66 and a plurality of nuts 68. A pivot 70, such as a dowel pin, is fixedly secured to the block and extends into the dowel hole 64 to allow pivotal movement of the body 58 and to establish a movable axis 72 through the centerline of the shaft 60 coincident with the centerline 49 of the adjustable idler gear 23. The shaft 60 of the body 58 has a plurality of threaded holes 74 extending into the shaft 60 and terminating near the body 58. The adjustable idler gear 23 is rotatably mounted on the shaft 60. A thrust plate 76 having a plurality of holes 78 is mounted to the shaft 60 of the body 58 by a securing means 80, such as a plurality of bolts, to retain the adjustable idler gear 23 on the shaft 60. The adjustable idler gear 23 has a plurality of access slots 81 formed therein to provide access to the plurality of studs 66 and nuts 68.

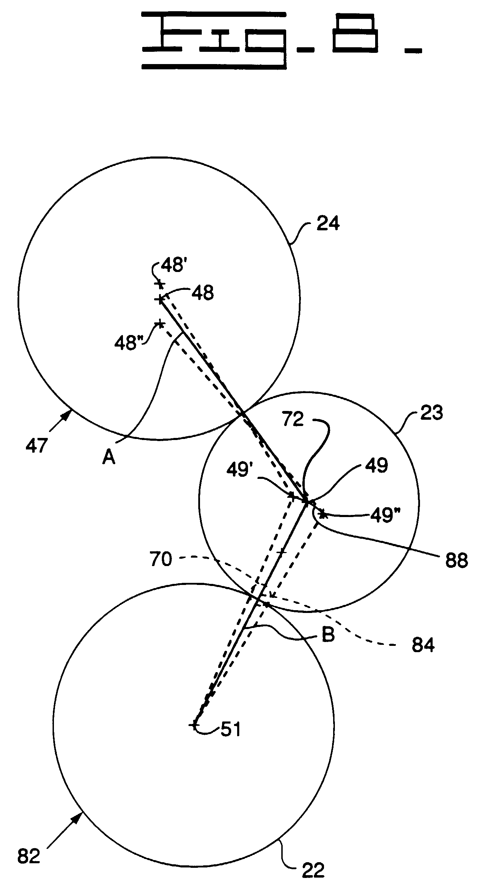

A geometric alignment 82 relationship of the camshaft gear 24, the adjustable idler gear 23, and the idler gear 22 is shown for the second embodiment of the backlash adjustment mechanism 26 in Fig. 8. A pivot point 84 is located at the center of the dowel pin 70 and is positioned essentially on center distance line B. A means 86, shown in Fig. 6, is provided for pivoting the body 58 around the pivot point 84 to adjust the center distance between the camshaft gear 24 and the adjustable idler gear 23. An arcuate path 88 is created about the pivot point 84 as the movable axis 72 pivots between the adjustment positions 49'-49".

### Industrial Applicability

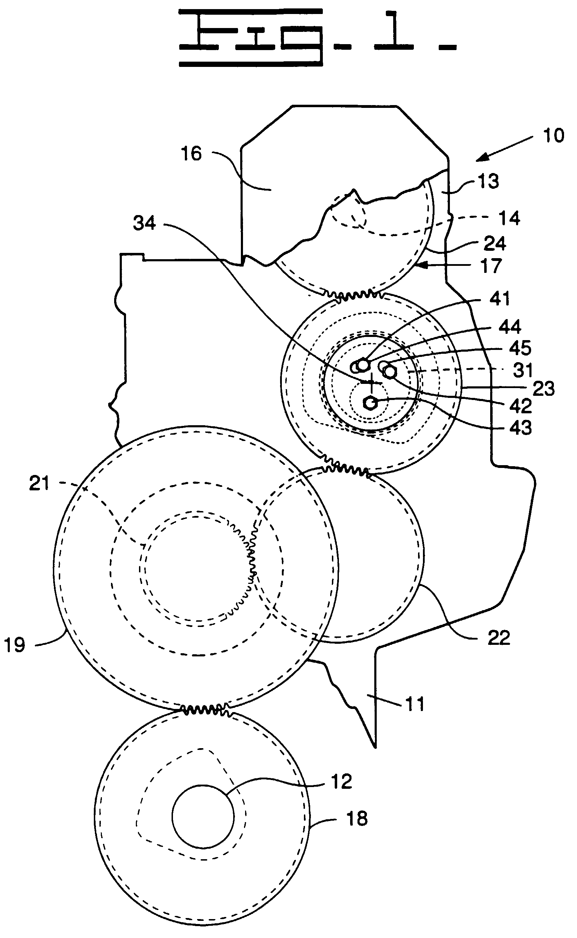

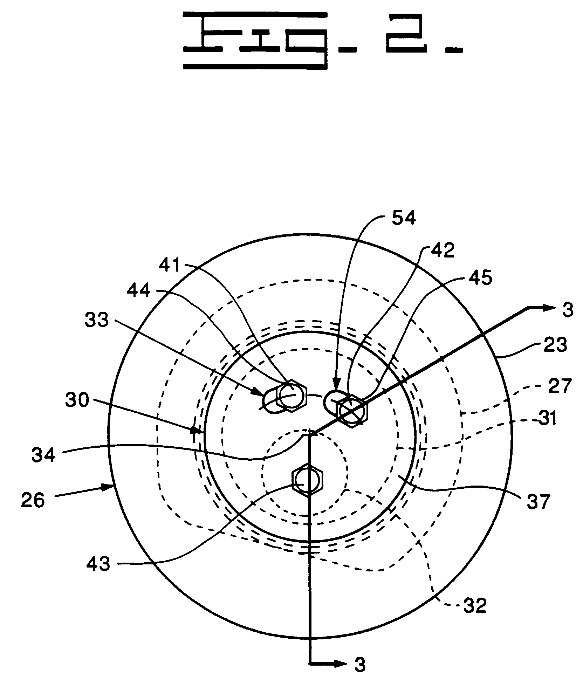

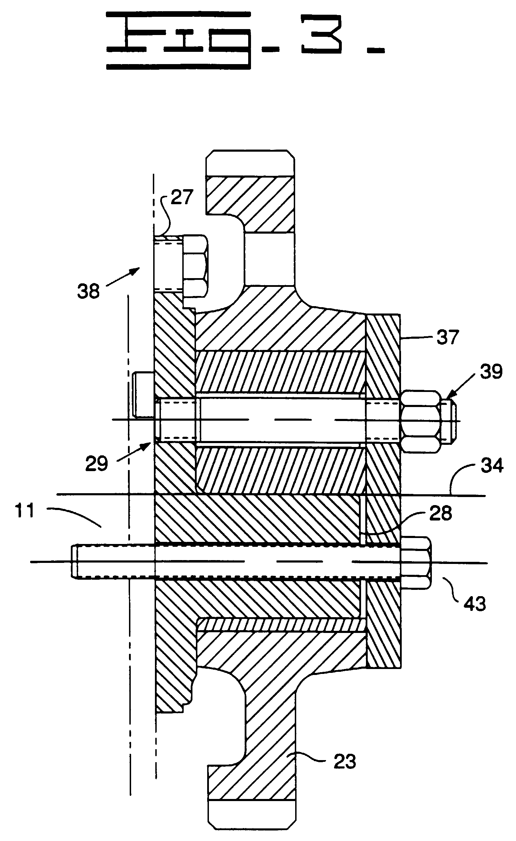

The backlash adjustment mechanism 26 provides the ability to adjust backlash between the adjustable idler gear 23 and the camshaft gear 24 while maintaining a substantially fixed center distance between the adjustable idler gear 23 and the idler gear 22. Referring to Figs. 1-4, adjustment begins by loosening the nuts 44, 45, and 46 on the thrust plate 37, leaving the studs 41, 42, and 43 extending through the thrust plate 37. The known nominal center distance line A is used as a measure to adjust the center distance, indicated by backlash measurements, between the camshaft gear 24 and the adjustable idler gear 23. The slotted holes 33 of the rotor 31 permit a plurality of adjustment positions on the arcuate path 53, between 49' and 49", by pivoting with the rotor about the pivot point 52 of the shaft 28. The slotted holes 33, thereby, allow adjustment of the center distance of the adjustable idler gear 23 with respect to the camshaft gear 24 whenever the camshaft gear 24 moves out of it's nominal adjustment position 48. The geometric alignment 47 relationship of the pivot point 52, in respect to the fixed center distance line B, provides a substantially fixed center distance between the adjustable idler gear 23 and the idler gear 22, well within the desired backlash tolerance range, throughout the adjustment of the adjustable idler gear 23 in respect to the camshaft gear 24. This geometric alignment 47 relationship eliminates the need to adjust backlash between the adjustable idler gear 23 and the idler gear 22, while backlash adjustment is available for any movement of the camshaft gear 24 between 48' and 48". With the pivot point 52 placed essentially on the center distance line B, the change from the extreme adjustment positions 49'-49" does not substantially change the center distance between centerline 51 and centerline 49 of the idler gear 22 and the adjustable idler gear 23, respectively, due to the geometry of the alignment. The backlash adjustment is completed by tightening the nuts 44, 45, and 46 against the thrust plate 37 thereby fixing the position of the rotor 31, and thus, the adjustable idler gear 23.

In the second embodiment, adjustment begins by loosening the nuts 68 to allow the body 58 to pivot freely about the dowel pin 70. The known nominal center distance A is used as a measure to adjust the center distance, indicated by backlash measurements, between the camshaft gear 24 and the adjustable idler gear 23. The slotted holes 62 of the body 58 permit a plurality of adjustment positions along the arcuate path 88, between 49' and 49" by pivoting with the body 58 about the dowel pin 70. The slotted holes 62, thereby, allow adjustment of the center distance of the adjustable idler gear 23 with respect to the camshaft gear 24 whenever the camshaft gear 24 moves out of it's nominal adjustment position 48. The geometric alignment 82 relationship of the pivot point 84 in respect to the fixed center distance line B functions in similar manner as that of the geometric alignment 47 relationship of the first embodiment. The backlash adjustment is completed by tightening the plurality of nuts 68 thereby securing the body 58 to the cylinder block 11. The adjustable idler gear 23 is rotatably mounted on the shaft 60 of the body 58 and the thrust plate 76 is mounted to the shaft 60 of the body 58 to retain the adjustable idler gear 23.

In view of the above, it is apparent that the present invention provides an improved means to adjust for backlash between the adjustable idler gear and the camshaft gear. The present invention utilizes a simplified structure consisting of an idler gear mounting, such as a body having a shaft or an eccentrically and pivotally mounted rotor, which mount the adjustable idler gear to provide both the ability for adjustment and a geometric alignment which substantially fixes the center distance between the adjustable idler gear and one of its mating gears, eliminating the need for adjustment between the two gears.

## Claims

1. A gear train with backlash adjustment, the gear train (17) including a first gear (22) having a first centerline ((41), a second gear (24) having a second centerline (48), an idler gear (23) having a third centerline (49) drivingly connecting the first and the second gear, and an idler gear mounting (31; 58) rotatably supporting the idler gear and being releasably connected to a fixed member (11) and establishing a movable axis (34; 72) coincidental with the centerline (49) of the idler gear (23), characterised in that said idler gear (23) meshes directly with the first and the second gear, a pivot (28; 70) is fixedly connected to said fixed member (11) with the idler gear mounting (31; 58) being pivotal thereabout, and said pivot (28; 70) is disposed between the centerlines (49 and 51) of the idler gear (23) and the first gear (22) and substantially on a line (B) intersecting the centerlines (49 and 51) of the idler gear (23) and the first gear (22) so that a center distance between the idler gear (23) and the second gear (24) can be adjusted while maintaining a substantially fixed distance between the idler gear (23) and the first gear (22).

2. A gear train according to claim 1, wherein the idler gear mounting (31, 58) has a plurality of slotted holes (33,62) to establish a plurality of possible adjustment positions.

3. A gear train according to claim 1 or claim 2, wherein the centerlines of the first gear (22), the pivot (28,70), and the movable axis (34,72) are located on a straight line at one of the adjustment positions of the idler gear mounting (31,58).

4. A gear train according to claim 3, wherein the one adjustment position is the nominal adjustment position (49).

5. A gear train according to any one of the preceding claims, wherein the pivot (28, 70) has a pivot point (52,84) at the center of the pivot (28,70), the pivot point (52,84) defining a geometric alignment (47,82) relationship between the first rotatable gear (22), the idler gear (23), and the second rotatable gear (24).

6. A gear train according to claim 5, wherein the geometric alignment (47,82) relationship includes the pivot point (52,84) lying essentially on a line passing through the centerlines (49,51) of the first rotatable gear (22) and the idler gear (23), respectively, when the idler gear mounting (31,58) is at its nominal adjustment position (49), so that a substantially fixed center distance is maintained between the first rotatable gear (22) and the idler gear (23) throughout the adjustment of backlash between the idler gear (23) and the second rotatable gear (24).

7. A gear train according to any one of the preceding claims, wherein the pivot (70) is a dowel pin (70).

8. A gear train according to claim 7, wherein the idler gear mounting (58) includes a body (58) having a shaft (60) rotatably mounting the idler gear (23), the idler gear mounting (58) being pivoted on the dowel pin (70) and releasably mounted on the member (11).

9. A gear train according to claim 8, including fastening means (65) for releasably securing the body (58) at a selected adjustment position.

10. A gear train according to claim 9, including securing means (80) for retaining the idler gear (23) on the shaft (60), the securing means (80) having a thrust plate (76) mounted to the body (58).

11. A gear train according to any one of claims 1 to 6, wherein the pivot (28) includes a body (27) mounted on the member (11) having a shaft (28) extending outwardly therefrom and the pivot (28) is the shaft (28).

12. A gear train according to claim 11, wherein the idler gear mounting (31) is a rotor (31) rotatably mounting the idler gear (23), the rotor (31) eccentrically and pivotally mounted on the shaft (28).

13. A gear train according to claim 12, wherein the rotor (31) has an off-center mounting bore (32) receiving the shaft (28).

14. A gear train according to claim 12 or claim 13, including securing means (39) for releasably securing the rotor (31) at a selected adjustment position and for retaining the idler gear (23) on the rotor (31).

15. A gear train according to claim 14, wherein the securing means (39) includes a thrust plate (37) mounted to the body (27).

16. An internal combustion engine (10) having a cylinder block (11) rotatably mounting a crankshaft (12); a cylinder head (13) removably connected to the cylinder block (11); a camshaft (14) rotatably mounted within the internal combustion engine (10); and a gear train (17) according to any one of the preceding claims driving the camshaft (14) from the crankshaft (12), the idler gear mounting (31,58) being releasably connected to the cylinder block (11), and the pivot (28,70) being fixedly connected to the cylinder block (11).

17. An engine according to claim 16, wherein the camshaft is an overhead camshaft (14) mounted in the cylinder head (13).

## Patentansprüche

1. Eine Getriebeanordnung mit Spieleinstellung wobei die Getriebeanordnung 17 folgendes aufweist:
ein erstes Zahnrad 22 mit einer ersten Mittellinie 41, ein zweites Zahnrad 24 mit einer zweiten Mittellinie 48, ein Lehrlaufzahnrad 23 mit einer dritten Mittellinie 49 antriebsmäßig die ersten und zweiten Zahnräder verbindend, und eine Lehrlaufzahnradanordnung 31; 58 die das Lehr-laufzahnrad trägt und lösbar verbunden ist mit einem festen Glied 21 und eine bewegliche Achse 34; 72 vorsieht oder definiert und zwar zusammenfallend mit der Mittellinie 49 des Lehrlaufzahnrades 23
dadurch gekennzeichnet daß das Lehrlaufzahnrad 23 direkt mit den ersten und zweiten Zahnrädern in Eingriff steht, das Schwenkmittel 28; 70 fest mit dem feststehenden Glied 11 verbunden sind, wobei die Lehrlaufzahnradanordnung 31; 58 schwenkbar darum herum angeordnet ist und wobei die Schwenkmittel 28; 70 zwischen den Mittellinien 49 und 51 des Lehrlaufzahnrades 23 und des ersten Zahnrades 22 angeordnet sind und zwar im wesentlichen auf einer Linie B welche die Mittellinien 49 und 51 des Lehrlaufzahnrades 23 und des ersten Zahnrades 22 schneidet, so daß der Mittenabstand zwischen dem Lehrlaufzahnrad 23 und dem zweiten Zahnrad 24 eingestellt werden kann, während ein im wesentlichen fester Abstand aufrechterhalten wird zwischen dem Lehrlaufzahnrad 23 und dem ersten Zahnrad 22.

2. Getriebeanordnung nach Anspruch 2 wobei die Lehrlaufzahnradanordnung 31; 58 eine Vielzahl von geschlitzten Löchern 33; 62 besitzt, um eine Vielzahl von möglichen Einstellpositionen vorzusehen.

3. Getriebeanordnung nach Anspruch 1 oder 2 wobei die Mittellinien des ersten Zahnrades 22, der Schwenkmittel 28; 70 und der beweglichen Achse 34; 72 auf einer geraden Linie angeordnet sind und zwar an einer der Einstellpositionen der Lehrlaufzahnradanordnung 31; 48.

4. Getriebeanordnung nach Anspruch 3 wobei die eine Einstellposition die nominelle Einstellposition 49 ist.

5. Getriebeanordnung nach einem der vorhergehenden Ansprüche wobei die Schwenkmittel 28; 70 einen Schwenkpunkt 52; 54 an der Mitte der Schwenkmittel 28; 70 aufweisen, wobei der Schwenkpunkt 52; 84 eine geometrische Ausrichtbeziehung 47; 82 definiert und zwar zwischen dem ersten drehbaren Zahnrad 22, dem Lehrlaufzahnrad 23 und dem zweiten drehbaren Zahnrad 24.

6. Getriebeandordnung nach Anspruch 5 wobei die geometrische Ausrichtbeziehung 47; 82 den Schwenkpunkt 52; 84 aufweist und zwar im wesentlichen auf einer Linie liegend die durch die Mittellinien 49; 51 des ersten drehbaren Zahnrades 22 bzw. des Lehrlaufzahnrades 23 verläuft wenn sich die Lehrlaufzahnradanordnung 31; 58 in ihrer nominellen Einstellposition 49, so daß ein im wesentlichen fester Mittenabstand aufrecht erhalten wird zwischen dem ersten drehbaren Zahnrad 22 und dem Lehrlaufzahnrad 23 und zwar über die Einstellung des Spiels zwischen Lehr-laufzahnrad 23 und zweitem drehbaren Zahnrad 24 hinweg.

7. Getriebeandordnung nach einem der vorhergehenden Ansprüche wobei die Schwenkmittel 70 ein Stift oder Paßstift 70 sind.

8. Getriebeanordnung nach Anspruch 7 wobei die Lehrlaufzahnradanordnung 58 einen Körper 58 aufweist mit einer Welle 60 drehbar das Lehrlaufzahnrad 23 anordnend und wobei die Lehrlaufzahnradanordnung 58 auf dem Stift bzw. Paßstift 70 schwenkbar ist und lösbar an dem Glied 11 angebracht ist.

9. Getriebeanordnung nach Anspruch 8 mit Befestigungsmitteln 65 zur lösbaren Befestigung des Körpers 58 an einer ausgewählten Einstellposition.

10. Getriebeanordnung nach Anspruch 9 mit Sicherungs - oder Befestigungsmitteln 80 zum Halten des Lehrlaufzahnrades 23 auf der Welle 60 wobei die Sicherungs - oder Befestigungsmittel 80 eine Schubplatte 76 besitzen die am Körper 58 angebracht ist.

11. Getriebeanordnung nach einem der Ansprüche 1 bis 6 wobei die Schwenkmittel 28 einen Körper 27 aufweisen und zwar angebracht an dem Glied 11 mit einer Welle 28 die sich nach außen von dort erstreckt und wobei die Schwenkmittel 28 die Welle 28 sind.

12. Getriebeanordnung nach Anspruch 11 wobei die Lehrlaufzahnradanordnung 31 ein Rotor 31 ist, der drehbar das Lehrlaufzahnrad 23 lagert, und wobei der Rotor 31 exzentrisch und schwenkbar auf der Welle 28 angeordnet ist.

13. Getriebeanordnung nach Anspruch 12 wobei der Rotor 31 eine gegenüber der Mitte versetzte Befestigungsbohrung 32 aufweist und zwar zur Aufnahme der Welle 28.

14. Getriebeanordnung nach Anspruch 12 oder 13 einschließlich Sicherungs- oder Befestigungsmitteln 39 zur lösbaren Sicherung oder Befestigung des Rotor 31 in einer ausgewählten Einstellposition und zum Halten des Lehrlaufzahnrades 23 auf dem Rotor 31.

15. Getriebeanordnung nach Anspruch 14 wobei die Sicherungs- oder Befestigungsmittel 39 eine Schubplatte 37 angebracht am Körper 27 aufweisen.

16. Ein Verbrennungsmotor 10 mit einem Zylinderblock 11 der eine Kurbelwelle 12 drehbar lagert, ferner mit einem Zylinderkopf 13 der lösbar mit dem Zylinderblock 11 verbunden ist, ferner mit einer Nockenwelle 14 drehbar innerhalb des Verbrennungsmotors 10 gelagert, und wobei eine Getriebeanordnung 17 gemäß einem der vorhergehenden Ansprüche die Nockenwelle 14 von der Kurbelwelle 12 antreibt, wobei die Lehrlaufzahnradanordnung 31; 58 lösbar mit dem Zylinderblock 11 verbunden ist, und wobei die Schwenkmittel 28; 70 fest mit dem Zylinderblock 11 verbunden sind.

17. Motor nach Anspruch 16 wobei die Nockenwelle eine obenliegende Nockenwelle 14 angebracht im Zylinderkopf 13 ist.

## Revendications

1. Train d'engrenages à réglage de jeu, le train d'engrenages (17) comprenant un premier pignon (22) ayant un premier axe (51), un second pignon (24) ayant un second axe (48), un pignon fou (23) ayant un troisième axe (49) en relation d'engrenage avec les premier et second pignons, et un montage de pignon fou (31 ; 58) portant à rotation le pignon fou et étant relié de façon libérable à un élément fixe (11) et établissant un axe mobile (34, 72) qui coïncide avec l'axe (49) du pignon fou (23), caractérisé en ce que le pignon fou (23) s'engrène directement avec les premier et second pignons, un pivot (28 ; 70) est connecté de façon fixe audit élément fixe (11), le montage de pignon fou (31 ; 58) étant susceptible de pivoter autour, et ledit pivot (28 ; 70) est disposé entre les axes (49 et 51) du pignon fou (23) et du premier pignon (22) et sensiblement sur une ligne (B) coupant les axes (49 et 51) du pignon fou (23) et du premier pignon (22) de sorte que la distance de centre à centre entre le pignon fou (23) et le second pignon (24) peut être réglée tout en maintenant une distance sensiblement fixe entre le pignon fou (23) et le premier pignon (22).

2. Train d'engrenages selon la revendication 1, dans lequel le montage de pignon fou (31, 58) comprend une pluralité de trous en forme de fente (33, 62) pour établir une pluralité de positions de réglage possibles.

3. Train d'engrenages selon la revendication 1 ou 2, dans lequel les axes du premier pignon (22) et du pivot (28, 70) et l'axe mobile (34, 72) sont disposés sur une ligne droite pour l'une des positions de réglage du montage de pignon fou (31, 58).

4. Train d'engrenages selon la revendication 3, dans lequel ladite une des positions de réglage est la position de réglage nominale (49).

5. Train d'engrenages selon l'une quelconque des revendications précédentes, dans lequel le pivot (28, 70) a un point de pivotement (52, 84) disposé au centre du pivot (28, 70), le point de pivotement (52, 84) définissant une relation d'alignement géométrique (47, 82) entre le premier pignon tournant (22), le pignon fou (23) et le second pignon tournant (24).

6. Train d'engrenages selon la revendication 5, dans lequel la relation d'alignement géométrique (47, 82) comprend le point de pivotement (52, 84) se trouvant essentiellement sur la ligne passant par les axes (49, 51) du premier pignon tournant (22) et du pignon fou (23), respectivement, quand le montage de pignon fou (31, 58) est à sa position nominale de réglage (49), de sorte qu'une distance centre à centre sensiblement fixe est maintenue entre le premier pignon tournant (22) et le pignon fou (23) au cours du réglage du jeu entre le pignon fou (23) et le second pignon tournant (24).

7. Train d'engrenages selon l'une quelconque des revendications précédentes, dans lequel le pivot (70) est un goujon de guidage (70).

8. Train d'engrenages selon la revendication 7, dans lequel le montage de pignon fou (58) comprend un corps (58) ayant un axe (60) recevant à rotation le pignon fou (23), le montage de pignon fou (58) étant articulé sur le goujon de guidage (70) et monté de façon libérable sur l'élément (11).

9. Train d'engrenages selon la revendication 8, comprenant un moyen de fixation (65) pour fixer de façon libérable le corps (58) à une position de réglage choisie.

10. Train d'engrenages selon la revendication 9, comprenant un moyen de fixation (80) pour maintenir le pignon fou (23) sur l'arbre (60), le moyen de fixation (80) comprenant une plaque de pression (76) montée sur le corps (58).

11. Train d'engrenages selon l'une quelconque des revendications 1 à 6, dans lequel le pivot (28) comprend un corps (27) monté sur l'élément (11) ayant un arbre (28) s'étendant vers l'extérieur à partir de là et dans lequel le pivot (28) constitue l'arbre (28).

12. Train d'engrenages selon la revendication 11, dans lequel le montage de pignon fou (31) est un rotor (31) supportant à rotation le pignon fou (23), le rotor (31) étant monté de façon excentrique à rotation sur l'arbre (28).

13. Train d'engrenages selon la revendication 12, dans lequel le rotor (31) comprend un trou de montage excentré (32) recevant l'arbre (28).

14. Train d'engrenages selon la revendication 12 ou 13, comprenant un moyen de fixation (39) pour fixer de façon libérable le rotor (31) à une position de réglage choisie et pour maintenir le pignon fou (23) sur le rotor (31).

15. Train d'engrenages selon la revendication 14, dans lequel le moyen de fixation (39) comprend une plaque de pression (37) montée sur le corps (27).

16. Moteur à combustion interne (10) ayant un bloc cylindre (11) portant à rotation un vilebrequin (12) ; une tête de cylindre (13) reliée de façon amovible au bloc cylindre (11) ; un arbre à came (14) monté à rotation dans le moteur à combustion interne (10) ; et un train d'engrenages (17) selon l'une quelconque des revendications précédentes pilotant l'arbre à came (14) à partir du vilebrequin (12), le montage de pignon fou (31, 58) étant relié de façon amovible au bloc cylindre (11) et le pivot (28, 70) étant relié de façon fixe au bloc cylindre (11).

17. Moteur selon la revendication 16, dans lequel l'arbre à came est un arbre à came en tête (14) monté sur la tête de cylindre (13).
